# EUROPEAN PATENT APPLICATION

(11) **EP 4 458 472 A1**
(43) Date of publication of application: **06.11.2024**
(21) Application number: 22915492.7
(22) Date of filing: 26.10.2022
(51) Int. Cl.: B03B 5/36

(54) **PURIFIER AND PURIFIER CONTROL METHOD**

(30) Priority: 27.12.2021 JP 2021212694
(71) Applicant: Shimadzu Corporation, Nakagyo-ku, Kyoto-shi, Kyoto 604-8511 (JP)
(72) Inventor: IKEZAWA, Yoshio, Kyoto-shi, Kyoto 604-8511 (JP)
(74) Representative: Kilian Kilian & Partner mbB
(86) International application number: PCT/JP2022/039820
(87) International publication number: WO 2023/127258

(57) **Abstract**

In a container (50), a sample is separated with a heavy solution based on a specific gravity. An overflow pipe (80) is a pipe provided at an upper portion of the container, the overflow pipe (80) being arranged to cause a supernatant containing a target substance separated by gravity separation in the container (50) to overflow from the upper portion of the container (50). A control device controls entry and exit of the heavy solution into and from the container (50). The control device causes some of the supernatant produced by gravity separation to flow over the container (50) through the overflow pipe (80), thereafter causes the supernatant that remains in the overflow pipe (80) to flow back into the container (50), and then causes the supernatant to flow over again through the overflow pipe (80).

## Description

### TECHNICAL FIELD

The present invention relates to a purification apparatus and a method of controlling a purification apparatus.

### BACKGROUND ART

In order to collect a target substance which is a component to be collected, a mixed sample containing the target substance has been purified. NPL 1 discloses a purification instrument that collects microplastic contained in a mixed sample collected from the sea, by gravity separation of the mixed sample with the use of a heavy solution.

### CITATION LIST

### NON PATENT LITERATURE

NPL 1: Hannes K. Imhof et al., "A novel, highly efficient method for the separation and quantification of plastic particles in sediments of aquatic environments," LIMNOLOGY and OCEANOGRAPHY: METHODS, Volume 10, Issue 7, pp. 524-537, 17 July 2012, https://doi.org/10.4319/lom.2012.10.524

### SUMMARY OF INVENTION

### TECHNICAL PROBLEM

In such a purification instrument, the target substance separated from the sample may be attached to an inner wall of the purification instrument and remain thereon. The remaining target substance as such leads to a concern about lowering in rate of collection thereof.

### SOLUTION TO PROBLEM

A purification apparatus according to a first aspect of the present disclosure is a purification apparatus that purifies a sample containing a target substance by gravity separation. The purification apparatus includes a container, an overflow pipe, and a control device. In the container, the sample is separated with a heavy solution based on a specific gravity. The overflow pipe is a pipe provided at an upper portion of the container, the overflow pipe being arranged to cause a supernatant containing the target substance separated by gravity separation in the container to overflow from the upper portion of the container. The control device controls entry and exit of the heavy solution into and from the container. The control device is further configured to cause some of the supernatant produced by gravity separation to flow over the container through the overflow pipe, thereafter cause the supernatant that remains in the overflow pipe to flow back into the container, and then cause the supernatant to flow over again through the overflow pipe.

A control method according to a second aspect of the present disclosure is a control method performed by a control device in a purification apparatus. The purification apparatus includes a container, an overflow pipe, and a control device. In the container, a sample is separated with a heavy solution based on a specific gravity. The overflow pipe is a pipe provided at an upper portion of the container, the overflow pipe being arranged to cause a supernatant containing a target substance separated by gravity separation in the container to overflow from the upper portion of the container. The control device controls entry and exit of the heavy solution into and from the container. The control method includes causing some of the supernatant produced by gravity separation to flow over the container through the overflow pipe, causing the supernatant that remains in the overflow pipe to flow back into the container, and causing the supernatant that has flowed back to flow over again through the overflow pipe.

### ADVANTAGEOUS EFFECTS OF INVENTION

According to the purification apparatus according to the present disclosure, the target substance that remains in the overflow pipe in overflow of some of the supernatant produced by gravity separation through the overflow pipe can come off from an inner wall of the overflow pipe and return to the supernatant in the container by backflow of the supernatant that remains in the overflow pipe into the container. The supernatant containing the target substance can again be caused to flow over through the overflow pipe so that the target substance that remained on the inner wall can be collected. Therefore, possibility that the target substance remains on the inner wall of the purification instrument can be lowered and a rate of collection thereof can be improved.

### BRIEF DESCRIPTION OF DRAWINGS

Fig. 1 is a diagram schematically showing a purification apparatus according to an embodiment.
Fig. 2 is a diagram for illustrating a hardware configuration of the purification apparatus.
Fig. 3 is a flowchart of purification processing performed by the purification apparatus.
Fig. 4 is a flowchart of processing for collecting a target substance in a comparative example.
Fig. 5 is a diagram for illustrating collection of the target substance by backflow of a supernatant in the embodiment.
Fig. 6 is a flowchart showing processing for collecting the target substance by backflow of the supernatant in the embodiment.

### DESCRIPTION OF EMBODIMENTS

The present embodiment will be described in detail with reference to the drawings. The same or corresponding elements in the drawings have the same reference characters allotted and description thereof will not be repeated in principle.

### [1. Configuration of Purification Apparatus]

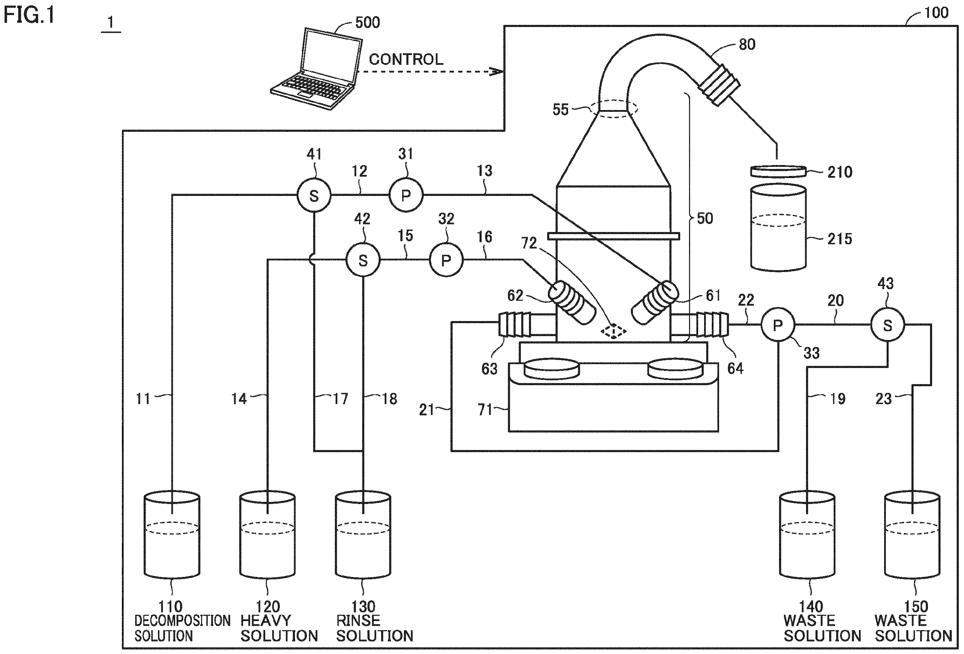

A main configuration of a purification apparatus 1 according to an embodiment will be described with reference to Fig. 1. Fig. 1 is a diagram schematically showing purification apparatus 1 according to the embodiment. As shown in Fig. 1, purification apparatus 1 includes a purification instrument 100 that purifies a mixed sample and a control device 500 that controls purification instrument 100. Purification apparatus 1 according to the embodiment purifies the mixed sample under the control of purification instrument 100 by control device 500 to collect a component to be collected (target substance) that is contained in the mixed sample. "Purification" encompasses taking a target substance out of a mixture.

Any form of a mixed sample may be applicable so long as a "mixed sample" to be purified by purification apparatus 1 contains a target substance. Exemplary "mixed samples" include seawater and sand collected from the sea or the seashore and processed products such as food and cosmetics. In the embodiment, seawater and sand collected from the sea or the seashore represent an exemplary "mixed sample." The "mixed sample" is also simply referred to as a "sample" below.

Any component may be applicable so long as the "target substance" to be collected by purification apparatus 1 is collected by purification apparatus 1. Exemplary "target substances" include microplastic which is fine plastic particles having a size not larger than 5 mm. In the embodiment, microplastic contained in seawater and sand collected from the sea or the seashore represents an exemplary "target substance."

Purification instrument 100 includes a container 50 where a sample is accommodated, pipes 11 to 22, pumps 31 to 33, electromagnetic valves 41 to 43, ports 61 to 64, a stirrer 71, a stirring bar 72, an overflow pipe 80, a decomposition solution reservoir 110, a heavy solution reservoir 120, a rinse solution reservoir 130, waste solution reservoirs 140 and 150, a detection filter 210, and a supernatant reservoir 215.

Pipe 11 connects decomposition solution reservoir 110 and electromagnetic valve 41 to each other. Pipe 12 connects electromagnetic valve 41 and pump 3 1 to each other. Pipe 13 connects pump 31 and port 61 provided in an outer circumferential portion of container 50 to each other. Decomposition solution reservoir 110 and port 61 of container 50 are thus connected to each other through pipes 11, 12, and 13 with electromagnetic valve 41 and pump 31 being interposed.

Pipe 14 connects heavy solution reservoir 120 and electromagnetic valve 42 to each other. Pipe 15 connects electromagnetic valve 42 and pump 32 to each other. Pipe 16 connects pump 32 and port 62 provided in the outer circumferential portion of container 50 to each other. Heavy solution reservoir 120 and port 62 of container 50 are thus connected to each other through pipes 14, 15, and 16 with electromagnetic valve 42 and pump 32 being interposed.

Pipe 17 connects rinse solution reservoir 130 and electromagnetic valve 41 to each other. In other words, while electromagnetic valve 41 is connected to decomposition solution reservoir 110 through pipe 11, it is connected also to rinse solution reservoir 130 through pipe 14. Rinse solution reservoir 130 and port 61 of container 50 are thus connected to each other through pipes 17, 12, and 13 with electromagnetic valve 41 and pump 31 being interposed.

Pipe 18 connects rinse solution reservoir 130 and electromagnetic valve 42 to each other. In other words, while electromagnetic valve 42 is connected to heavy solution reservoir 120 through pipe 14, it is connected also to rinse solution reservoir 130 through pipe 18. Rinse solution reservoir 130 and port 62 of container 50 are thus connected to each other through pipes 18, 15, and 16 with electromagnetic valve 42 and pump 32 being interposed.

Pipe 19 connects waste solution reservoir 140 and electromagnetic valve 43 to each other. Pipe 20 connects electromagnetic valve 43 and pump 33 to each other. Pipe 21 connects pump 33 and port 63 provided in the outer circumferential portion of container 50 to each other. Waste solution reservoir 140 and port 63 of container 50 are thus connected to each other through pipes 19, 20, and 21 with electromagnetic valve 43 and pump 33 being interposed.

Pipe 22 connects pump 33 and port 64 provided in the outer circumferential portion of container 50 to each other. In other words, while pump 33 is connected to port 63 of container 50 through pipe 21, it is connected also to port 64 of container 50 through pipe 22. Waste solution reservoir 140 and port 64 of container 50 are thus connected to each other through pipes 19, 20, and 22 with electromagnetic valve 43 and pump 33 being interposed.

A pipe 23 connects waste solution reservoir 150 and electromagnetic valve 43 to each other. In other words, while electromagnetic valve 43 is connected to waste solution reservoir 140 through pipe 19, it is connected also to waste solution reservoir 150 through pipe 23. Waste solution reservoir 150 and port 63 of container 50 are thus connected to each other through pipes 23, 20, and 21 with electromagnetic valve 43 and pump 33 being interposed. Waste solution reservoir 150 and port 64 of container 50 are connected to each other through pipes 23, 20, and 22 with electromagnetic valve 43 and pump 33 being interposed.

A decomposition solution for treatment of a contaminant is stored in decomposition solution reservoir 110. The "contaminant" refers to a foreign matter in the mixed sample, other than a target substance. In the embodiment, an exemplary "contaminant" includes an organic contaminant having a property of an organic substance. Any "decomposition solution" may be applicable so long as the contaminant is decomposed therewith. In the embodiment, the "decomposition solution" decomposes an organic contaminant. An exemplary "decomposition solution" includes an oxidizing agent such as oxygenated water (H₂O₂) and a mixture of oxygenated water (H₂O₂) and iron (II) oxide (FeO). When seawater and sand are adopted as the "mixed sample," exemplary "organic contaminants" include a scrap piece of wood mixed in seawater or sand and planktons.

A heavy solution for separation of a sample based on a specific gravity difference is stored in heavy solution reservoir 120. Any heavy solution may be applicable so long as the "heavy solution" separates the sample based on the specific gravity difference. In the embodiment, the "heavy solution" allows an inorganic contaminant having a property of an inorganic substance to settle based on the specific gravity difference. Exemplary "heavy solutions" include sodium chloride (NaCl), sodium iodide (NaI), and zinc chloride (ZnCl₂). When seawater and sand are adopted as the "mixed sample," exemplary "inorganic contaminants" include sand, glass, and stone. A specific gravity of the "heavy solution" is set to be greater than a specific gravity of the "target substance" to be collected by purification apparatus 1 and to be smaller than a specific gravity of the "inorganic contaminant." For example, when microplastic is adopted as the "target substance" to be collected by purification apparatus 1 and sand, glass, stone, and the like are adopted as the "inorganic contaminant," the "heavy solution" should only be greater in specific gravity than microplastic and should only be smaller in specific gravity than sand, glass, stone, and the like. Specifically, the specific gravity of the "heavy solution" should only be set approximately to 1.5 to 1.7.

A rinse solution for cleaning of the inside of container 50 is stored in rinse solution reservoir 130. Any rinse solution may be applicable so long as the inside of container 50 is cleaned with the "rinse solution." An exemplary "rinse solution" includes water. The "rinse solution" plays a role to clean the inside of container 50 and a role to dilute the decomposition solution introduced into container 50.

A waste solution discharged from container 50 such as the heavy solution, the rinse solution, and sea water contained in the mixed sample is stored in waste solution reservoirs 140 and 150.

Pump 31 introduces the decomposition solution suctioned from decomposition solution reservoir 110 or the rinse solution suctioned from rinse solution reservoir 130 into container 50 through port 61 under the control by control device 500.

Pump 32 introduces the heavy solution suctioned from heavy solution reservoir 120 or the rinse solution suctioned from rinse solution reservoir 130 into container 50 through port 62 under the control by control device 500. Pump 32 is also referred to as an "introduction pump 32" below.

Pump 33 discharges the waste solution suctioned from container 50 through port 63 or port 64 to waste solution reservoir 140 or waste solution reservoir 150 under the control by control device 500. Pump 33 is also referred to as a "discharge pump 33" below.

Electromagnetic valve 41 switches a path to be connected to port 61 between a path between decomposition solution reservoir 110 and port 61 of container 50 (a path through pipes 11, 12, and 13) and a path between rinse solution reservoir 130 and port 61 of container 50 (a path through pipes 17, 12, and 13) under the control by control device 500.

Electromagnetic valve 42 switches a path to be connected to port 62 between a path between heavy solution reservoir 120 and port 62 of container 50 (a path through pipes 14, 15, and 16) and a path between rinse solution reservoir 130 and port 62 of container 50 (a path through pipes 18, 15, and 16) under the control by control device 500.

Electromagnetic valve 43 switches a path to be connected to ports 63 and 64 between a path between waste solution reservoir 140 and ports 63 and 64 of container 50 (a path through pipes 19, 20, and 21 or a path through pipes 19, 20, and 22) and a path between waste solution reservoir 150 and ports 63 and 64 of container 50 (a path through pipes 23, 20, and 21 or a path through pipes 23, 20, and 22) under the control by control device 500.

The decomposition solution in decomposition solution reservoir 110 or the rinse solution in rinse solution reservoir 130 suctioned by pump 31 is introduced into container 50 through port 61. The heavy solution in heavy solution reservoir 120 or the rinse solution in rinse solution reservoir 130 suctioned by pump 32 is introduced into container 50 through port 62. The waste solution in container 50 suctioned by pump 33 is discharged to waste solution reservoir 140 or waste solution reservoir 150 through ports 63 and 64. Port 62 is also referred to as an "introduction port 62" below. Ports 63 and 64 are also referred to as "discharge ports 63 and 64" below.

In the inside of each of ports 61 to 64, a filter (not shown) is provided not to allow discharge from container 50, of a target substance contained in the sample. The filter is a mesh having a mesh size small enough to trap microplastic which is the target substance. The filter (mesh) is, for example, a wire gauze made of steel use stainless (SUS) or a membrane filter made of polytetrafluoroethylene (PTFE) (Teflon^{™}). When microplastic is defined as a target component, the mesh size of the filter (mesh) should be small enough not to allow passage therethrough of a particle having a size of 0.1 to 5.0 mm, and the mesh size is preferably approximately 0.1 mm.

Stirrer 71 is, for example, a constant-temperature stirrer, and arranged below container 50. Stirrer 71 stirs the sample in container 50 by rotation of stirring bar 72 provided in container 50 under the control by control device 500. Furthermore, stirrer 71 keeps a temperature of the sample in container 50 constant by heating container 50 from below container 50 under the control by control device 500.

Overflow pipe 80 is connected to a discharge port 55 provided at an uppermost portion of container 50, and a supernatant of the sample containing the target substance is discharged therethrough from container 50 as flowing over to the outside. In the following, "flowing over" herein refers to discharge of the supernatant in container 50 to the outside through overflow pipe 80 unless particularly specified.

Detection filter 210 collects the target substance contained in the supernatant by filtering the supernatant of the sample that flows over through overflow pipe 80. The supernatant that has passed through detection filter 210 is collected in supernatant reservoir 215. Detection filter 210 is a mesh having a mesh size small enough to trap microplastic which is the target component. Detection filter 210 (mesh) is, for example, a wire gauze made of SUS or a membrane filter made of PTFE. When microplastic is defined as the target component, the mesh size of detection filter 210 (mesh) should be small enough not to allow passage therethrough of a particle having a size of 0.1 to 5.0 mm, and the mesh size is preferably approximately 0.1 mm.

Control device 500 may be implemented by a general-purpose computer or a dedicated computer for controlling purification instrument 100. Control device 500 controls pumps 31 to 33, electromagnetic valves 41 to 43, and stirrer 71 in purification instrument 100.

### [2. Hardware Configuration]

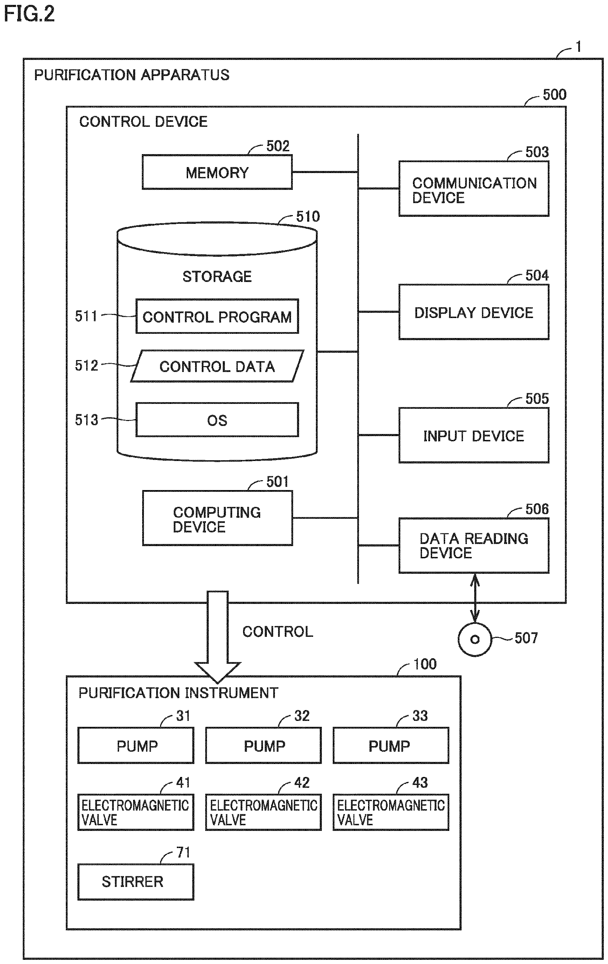

A hardware configuration of purification apparatus 1 according to the embodiment will be described with reference to Fig. 2. Fig. 2 is a diagram for illustrating a hardware configuration of purification apparatus 1 according to the embodiment. As shown in Fig. 2, control device 500 includes, as main hardware elements thereof, a computing device 501, a memory 502, a communication device 503, a display device 504, an input device 505, a data reading device 506, and a storage 510.

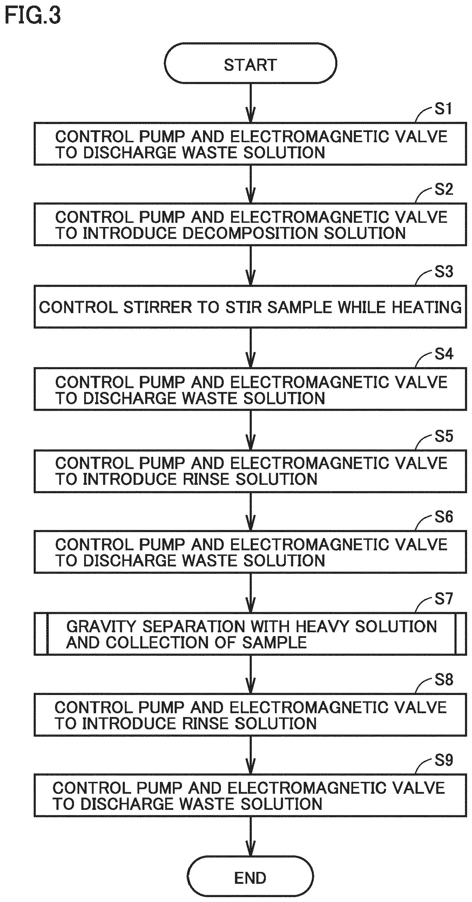

Computing device 501 is a computer that reads a program (for example, a control program 511 and an operating system (OS) 513) stored in storage 510 and develops the read program on memory 502 to execute the same. For example, computing device 501 performs purification processing (which will be described later with reference to Fig. 3) for controlling purification instrument 100 by executing control program 511. Computing device 501 is implemented, for example, by a central processing unit (CPU), a field programmable gate array (FPGA), a graphics processing unit (GPU), a multi processing unit (MPU), or the like. Computing device 501 may be implemented by processing circuitry.

Memory 502 provides a storage area where a program code or a work memory is temporarily stored in execution of any program by computing device 501. Memory 502 is implemented by a volatile memory such as a dynamic random access memory (DRAM) or a static random access memory (SRAM) or a non-volatile memory such as a read only memory (ROM) or a flash memory.

Communication device 503 transmits and receives data to and from another device over a network (not shown). Communication device 503 is in conformity with any communication scheme such as Ethernet^{®}, wireless local area network (LAN), and Bluetooth^{®}.

Display device 504 is implemented, for example, by a liquid crystal display (LCD), and shows a program design screen or an alert screen on the occurrence of an abnormal condition.

Input device 505 is implemented, for example, by a keyboard, a mouse, or the like, and used for input of design information by a user in design of a program. Input device 505 may include a start switch for starting purification processing by computing device 501.

Data reading device 506 reads data stored in a storage medium 507. Any storage medium such as a compact disc (CD), a digital versatile disc (DVD), or a universal serial bus (USB) memory may be applicable so long as various types of data can be stored in storage medium 507.

Storage 510 provides a storage area where various types of data required for purification processing or the like are stored. Storage 510 is implemented, for example, by a non-volatile memory device such as a hard disk drive (HDD) or a solid state drive (SSD). Control program 511, control data 512, and OS 513 are stored in storage 510.

Control program 511 is a program in which contents of purification processing are described, and executed by computing device 501. Control program 511 may be designed by a user with the use of input device 505, read from storage medium 507 by data reading device 506, or obtained through the network from another device such as a server by communication device 503.

Control data 512 is data used in execution of control program 511 by computing device 501. For example, control data 512 includes data such as a setting value for control of each of pumps 31 to 33, electromagnetic valves 41 to 43, and stirrer 71. Control data 512 may be inputted by a user with the use of input device 505, read from storage medium 507 by data reading device 506, or obtained through the network from another device such as a server by communication device 503.

OS 513 provides a basic function for computing device 501 to perform various types of processing.

### [3. Sample Purification Processing]

Sample purification processing will now be described with reference to Fig. 3. Fig. 3 is a flowchart of purification processing performed by purification apparatus 1. Each step shown in Fig. 3 is performed by execution of OS 513 and control program 511 by computing device 501 of control device 500. "S" in the drawings is used as abbreviation of "STEP".

For preparation, a user introduces a sample into container 50 of purification apparatus 1. For example, the user injects the sample into container 50 through a not-shown inlet. Thereafter, the user performs a start operation with the use of input device 505 of control device 500 to start control of purification instrument 100 by control device 500.

When control device 500 starts control of purification instrument 100, as shown in Fig. 3, control device 500 controls pump 33 and electromagnetic valve 43 to discharge the waste solution in container 50 to waste solution reservoir 150 through pipes 20 to 23 and ports 63 and 64 (S1). Microplastic or the like which is the target component contained in the sample remains in container 50 without being discharged to the outside, owing to the filter provided in the inside of ports 63 and 64.

Control device 500 then deactivates pump 33 on a discharge side and controls pump 31 and electromagnetic valve 41 to introduce the decomposition solution in decomposition solution reservoir 110 into container 50 through pipes 11 to 13 and port 61 (S2).

Control device 500 then controls stirrer 71 to rotate stirring bar 72 provided in container 50 to stir the sample while certain heat is applied to container 50 (S3). A temperature of container 50 and a rotation speed and a rotation time period of stirring bar 72 are set in advance by the user. As the sample is thus stirred, oxidation treatment with an oxidizing agent is performed and an organic contaminant contained in the sample is decomposed. Though heating is not necessarily required during stirring of the sample, decomposition by oxidation treatment tends to be accelerated by the temperature of the sample maintained constant by heating.

Control device 500 then controls pump 33 and electromagnetic valve 43 to discharge the waste solution in container 50 included in the sample in which the organic contaminant has been decomposed to waste solution reservoir 150 through pipes 20 to 23 and ports 63 and 64 (S4). Microplastic or the like which is the target substance contained in the sample remains in container 50 without being discharged to the outside, owing to the filter provided in the inside of ports 63 and 64.

Control device 500 then deactivates pump 33 on the discharge side and controls pump 31 and electromagnetic valve 41 to introduce the rinse solution in rinse solution reservoir 130 into container 50 through pipes 17, 12, and 13 and port 61 to clean the inside of container 50 (S5). At this time, control device 500 controls an amount of suction by pump 31 to introduce the rinse solution in an amount set in advance by the user into container 50.

Control device 500 then controls pump 33 and electromagnetic valve 43 to discharge the waste solution in container 50 into which the rinse solution has been introduced to waste solution reservoir 150 through pipes 20 to 23 and ports 63 and 64 (S6). The inside of container 50 is thus cleaned with the rinse solution. Microplastic or the like which is the target substance contained in the sample remains in container 50 without being discharged to the outside, owing to the filter provided in the inside of ports 63 and 64. Thereafter, control device 500 may let the sample stand as it is for a prescribed period (for example, for one day) to dry the sample.

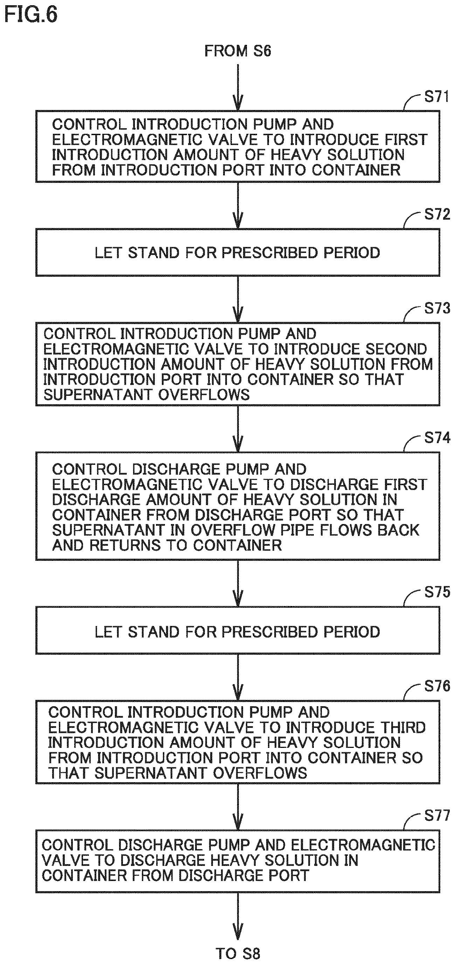

Control device 500 then performs processing for gravity separation with the use of the heavy solution to collect the sample (S7). Details of S7 will be described later with reference to Fig. 6.

Control device 500 then deactivates pump 33 on the discharge side and controls pump 32 and electromagnetic valve 42 to introduce the rinse solution in rinse solution reservoir 130 into container 50 through pipes 18, 15, and 16 and port 62 to clean the inside of container 50 (S8). At this time, control device 500 controls the amount of suction by pump 32 to introduce the rinse solution in the amount set in advance by the user into container 50.

Control device 500 then controls pump 33 and electromagnetic valve 43 to discharge the waste solution in container 50 into which the rinse solution has been introduced to waste solution reservoir 140 through pipes 19 to 22 and ports 63 and 64 (S9). The inside of container 50 is thus cleaned with the rinse solution.

### [4. Collection of Target Substance According to Comparative Example]

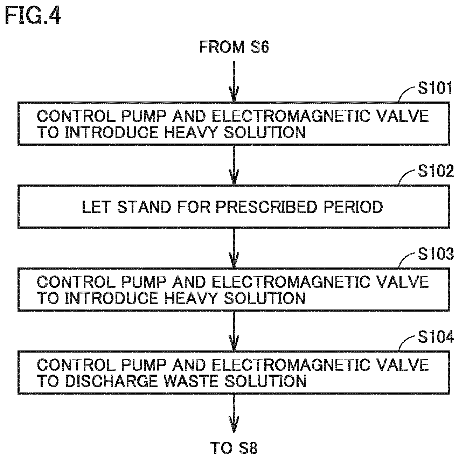

Fig. 4 is a flowchart of processing for collecting a target substance in a comparative example. Each step shown in Fig. 4 is performed instead of S7 in the purification processing shown in Fig. 3. In other words, in one implementation of the comparative example, S101 to S104 in Fig. 4 are performed after S1 to 6 in Fig. 3, and S8 to S12 in Fig. 3 are performed after S101 to 104 in Fig. 4.

Referring to Fig. 4, control device 500 controls pump 32 and electromagnetic valve 42 to introduce the heavy solution in heavy solution reservoir 120 into container 50 through pipes 14 to 16 and port 62 (S101). At this time, control device 500 controls the amount of suction by pump 32 to introduce the heavy solution in an amount set in advance by the user into container 50.

Thereafter, control device 500 lets the sample stand as it is for a prescribed period (for example, for one to three hours) (S102). As the heavy solution is thus introduced into the sample in container 50 and let stand, an inorganic contaminant contained in the sample settles around the bottom of container 50 owing to the specific gravity difference.

Control device 500 then again controls pump 32 and electromagnetic valve 42 to again introduce the heavy solution in heavy solution reservoir 120 into container 50 through pipes 14 to 16 and port 62 (S103). At this time, control device 500 controls the amount of suction by pump 32 to introduce the heavy solution in the amount set in advance by the user into container 50. As the heavy solution is thus introduced again into the sample in container 50, a fluid level of the sample separated based on the specific gravity gradually rises in container 50 and the supernatant of the sample containing the target substance soon reaches discharge port 55 of container 50. Then, the supernatant of the sample flows over to the outside through discharge port 55 and overflow pipe 80.

The supernatant of the sample that flows over through overflow pipe 80 is filtered by detection filter 210, and only the waste solution is collected in supernatant reservoir 215. Microplastic which is a target substance lighter in specific gravity than the heavy solution remains at detection filter 210.

After microplastic is collected as a result of purification of the sample, control device 500 controls pump 33 and electromagnetic valve 43 to discharge the waste solution in container 50 from which microplastic has been collected to waste solution reservoir 140 through pipes 19 to 22 and ports 63 and 64 (S104).

In the processing for collecting the sample in the comparative example shown in Fig. 4, there is a concern about possibility that the target substance is attached to the inner wall of overflow pipe 80 and remains thereon when the supernatant flows over through overflow pipe 80 in S23. In purification apparatus 1 according to the present embodiment, the supernatant in overflow pipe 80 is caused to flow back to move a gas-liquid interface in the overflow pipe to send the target substance that remains on the inner wall back again to the supernatant.

### [5. Collection of Sample by Backflow of Supernatant]

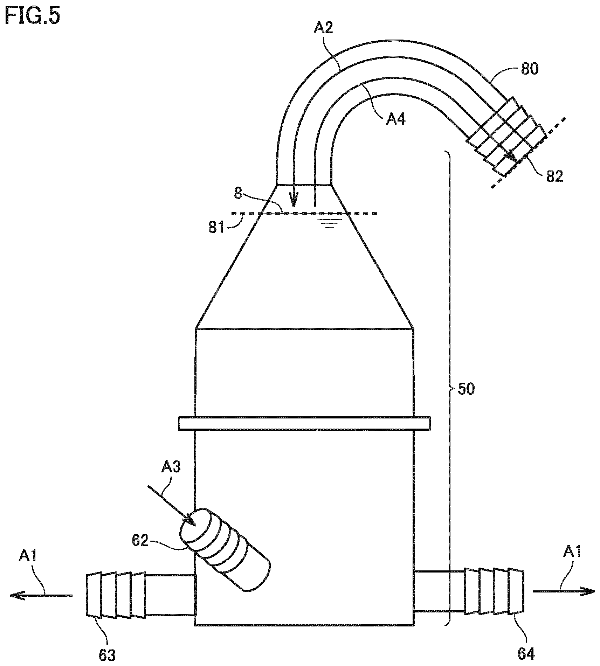

Fig. 5 is a diagram for illustrating collection of the target substance by backflow of the supernatant in the embodiment.

Referring to Fig. 5, when some of the supernatant produced by gravity separation flows over container 50 through overflow pipe 80, the gas-liquid interface in overflow pipe 80 is located at a position shown with a dotted line 82. When the heavy solution in container 50 is discharged from discharge ports 63 and 64 in this state as shown with an arrow A1, the supernatant that remains in overflow pipe 80 flows back into the container as shown with an arrow A2. The gas-liquid interface in overflow pipe 80 then moves to a position shown with a dotted line 81. Impact force originating from this movement of the gas-liquid interface, surface tension of the supernatant, and force originating from a water flow cause the target substance attached to the inner wall of overflow pipe 80 to come off. The target substance that has come off is sent back to the container together with the supernatant and mixed into the heavy solution in container 50. Thereafter, when container 50 is let stand for a prescribed period, the target substance gathers again at the supernatant in container 50. When the heavy solution is introduced into container 50 through introduction port 62 in this state as shown with an arrow A3, the supernatant flows over through overflow pipe 80.

Thus, in purification apparatus 1 according to the present embodiment, the supernatant that remains in the overflow pipe is caused to flow back to move the gas-liquid interface in overflow pipe 80, so that the target substance that remains on the inner wall of overflow pipe 80 can be collected.

Multiple opportunities for removal of the target substance attached to overflow pipe 80 by repeated movement of the gas-liquid interface in a direction shown with arrow A2 and a direction shown with an arrow A4 may be arranged. Thus, even the target substance that did not come off, for example, in first movement of the gas-liquid interface may come off in any movement of the gas-liquid interface and collected in the supernatant.

In this case, when the gas-liquid interface is to be moved in the direction shown with arrow A4, the supernatant does not necessarily have to be discharged to the outside every time, and may be discharged to the outside to collect the target substance in the last opportunity. When the gas-liquid interface is thus moved a plurality of times in overflow pipe 80, movement of the supernatant in the direction shown with arrow A4 not to the extent of discharge of the supernatant to the outside is also assumed as being encompassed in "overflow". Naturally, when the gas-liquid interface is moved in overflow pipe 80 a plurality of times, the supernatant may be discharged to the outside each time.

Similarly, in an example where the gas-liquid interface is repeatedly moved, when the gas-liquid interface is moved in the direction shown with arrow A2, the gas-liquid interface does not necessarily have to be moved back to the inside of container 50 each time. Thus, when the gas-liquid interface is moved a plurality of times in overflow pipe 80, such movement of the supernatant in the direction shown with arrow A2 as not reaching container 50 is also assumed as being encompassed in "backflow". Naturally, when the gas-liquid interface is moved in overflow pipe 80 a plurality of times, the gas-liquid interface may be moved back to the inside of container 50 each time.

In summary, after the supernatant produced by gravity separation flows over, backflow and overflow of the supernatant through the overflow pipe may be repeated a plurality of times.

### [6. Processing Relating to Collection of Target Substance by Backflow of Supernatant]

Fig. 6 is a flowchart showing control processing for collecting the target substance by backflow of the supernatant in the present embodiment. Each step shown in Fig. 6 is performed by execution of OS 513 and control program 511 by computing device 501 of control device 500.

Each step shown in Fig. 6 corresponds to a sub routine of S7 in Fig. 3. In other words, in one implementation, computing device 501 performs S71 to 77 in Fig. 5 after S1 to 6 in Fig. 3 and thereafter performs S8 to S9 in Fig. 3.

In S71, computing device 501 controls introduction pump 32 and electromagnetic valve 42 to introduce a first introduction amount of heavy solution into container 50 through introduction port 62. The first introduction amount is an amount of heavy solution appropriate for gravity separation of the sample in container 50.

In S72, computing device 501 lets the sample stand as it is for a prescribed period. When the heavy solution is thus introduced into the sample in container 50 and let stand, an inorganic contaminant contained in the sample settles around the bottom of container 50 based on the specific gravity difference.

In S73, computing device 501 controls introduction pump 32 and electromagnetic valve 42 to introduce a second introduction amount of heavy solution into container 50 through introduction port 62 to cause some of the supernatant to flow over through overflow pipe 80. The second introduction amount is, for example, a value calculated by adding an amount of a part of the supernatant assumed as mainly containing the target substance to an amount calculated by subtracting the first introduction amount from a volume of container 50. When the second introduction amount of heavy solution is introduced, the part of the supernatant mainly containing the target substance is discharged to the outside.

In S74, computing device 501 controls discharge pump 33 and electromagnetic valve 43 to discharge a first discharge amount of heavy solution in container 50 through discharge ports 63 and 64 to cause the supernatant in overflow pipe 80 to flow back and return to the container. The first discharge amount corresponds, for example, to a volume of overflow pipe 80 and container 50 included in an area between dotted line 81 and dotted line 82 in Fig. 4. The gas-liquid interface in overflow pipe 80 is thus moved, and the target substance attached to the inner wall of overflow pipe 80 returns to the inside of container 50 together with the supernatant.

In S75, computing device 501 lets the sample stand as it is for a prescribed period. When the heavy solution is thus introduced into the sample in container 50 and let stand, the target substance that has returned to the inside of container 50 gathers again at the supernatant. In S75, the period for which the sample is let stand is, for example, as long as the period for which the sample is let stand in S73, or may be different therefrom.

In S76, computing device 501 controls introduction pump 32 and electromagnetic valve 42 to introduce a third introduction amount of heavy solution into container 50 through introduction port 62 to cause the supernatant in container 50 to flow over through overflow pipe 80. The third introduction amount is, for example, a value calculated by adding the amount of the part of the supernatant assumed as mainly containing the target substance to the first discharge amount. When the third introduction amount of heavy solution is introduced, the part of the supernatant mainly containing the target substance is discharged to the outside. The supernatant discharged to the outside in S76 is assumed to contain at least some of the target substance attached to the inside of overflow pipe 80 at the time of overflow in S73 and returned to the supernatant in backflow in S74. In other words, in S76, at least some of the target substance attached to the inner wall of overflow pipe 80 can be collected.

In S77, computing device 501 controls discharge pump 33 and electromagnetic valve 43 to discharge the heavy solution in container 50 through discharge ports 63 and 64.

In S73 and S76, computing device 501 causes the heavy solution to be introduced into container 50 through introduction port 62 to cause the supernatant to flow over through overflow pipe 80. By doing so, a configuration for introduction of the heavy solution for gravity separation into container 50 can also be applied to overflow through the overflow pipe. In addition, in S74, computing device 501 causes the heavy solution in container 50 to be discharged through discharge ports 63 and 64 to cause the supernatant in overflow pipe 80 to flow back. By doing so, a configuration for discharge from container 50, of the waste solution separated based on the specific gravity can also be applied to backflow of the supernatant through overflow pipe 80. In other words, overflow and backflow through overflow pipe 80 can be achieved with a simplified configuration.

In S71, S73, and S76, computing device 501 controls the number of rotations and the rotation time period of introduction pump 32 to introduce the first to third introduction amounts of heavy solution. By doing so, the introduction pump that provides driving force for introduction of the heavy solution into container 50 can also be applied to control of the amount of introduction of the heavy solution. In other words, the amount of introduction of the heavy solution can be controlled with a simplified configuration.

Control of the amount of introduction, however, is not limited as such. A sensor (not shown) that detects the amount of introduction may be provided in purification instrument 100, and computing device 501 may have the first to third introduction amounts introduced based on a detection value from the sensor. The sensor is, for example, a fluid volume sensor that detects a fluid volume in container 50 (for example, a weight sensor and/or a fluid level sensor), a sensor that detects an amount of heavy solution introduced into container 50 (for example, a flow rate sensor provided in pipe 16), and/or a sensor that detects an amount of supernatant discharged through overflow pipe 80 (for example, a fluid volume sensor in supernatant reservoir 215).

Similarly, in S74, computing device 501 controls, for example, the number of rotations and the rotation time period of discharge pump 33 to discharge the first discharge amount of heavy solution. Various sensors may control the amount of discharge.

Thus, by control of the amount of introduction and the amount of discharge of the heavy solution into and from container 50, such control to discharge only a part of the supernatant mainly containing the target substance to the outside or to move the gas-liquid interface in the purification instrument back to a position appropriate for letting container 50 stand can be carried out.

Driving force for introduction and discharge of the heavy solution is not limited to driving force derived from the pump, and may be derived from a self-weight or suction by change in air pressure.

As set forth above, in the purification apparatus according to the present embodiment, some of the supernatant produced by gravity separation flows over the container through overflow pipe 80, thereafter the supernatant that remains in overflow pipe 80 is caused to flow back into container 50, and then the supernatant is again caused to flow over through overflow pipe 80. Thus, even when the target substance remains on the inner wall of overflow pipe 80 in first overflow, the target substance can return together with the supernatant to the inside of container 50 by backflow and can be collected by overflow again. Therefore, possibility that the target substance remains on the inner wall of purification instrument 100 can be lowered and a rate of collection thereof can be improved.

### [Aspects]

Illustrative embodiments described above are understood by a person skilled in the art as specific examples of aspects below.

(Clause 1) A purification apparatus according to one aspect is a purification apparatus that purifies a sample containing a target substance by gravity separation. The purification apparatus includes a container, an overflow pipe, and a control device. In the container, the sample is separated with a heavy solution based on a specific gravity. The overflow pipe is a pipe provided at an upper portion of the container, the overflow pipe being arranged to cause a supernatant containing the target substance separated by gravity separation in the container to overflow from the upper portion of the container. The control device controls entry and exit of the heavy solution into and from the container. The control device is further configured to cause some of the supernatant produced by gravity separation to flow over the container through the overflow pipe, thereafter cause the supernatant that remains in the overflow pipe to flow back into the container, and then cause the supernatant to flow over again through the overflow pipe.

According to the purification apparatus according to Clause 1, the target substance that remains in the overflow pipe in overflow of some of the supernatant produced by gravity separation through the overflow pipe can come off from an inner wall of the overflow pipe and return to the supernatant in the container by backflow of the supernatant that remains in the overflow pipe into the container. The supernatant containing the target substance can again be caused to flow over through the overflow pipe so that the target substance that remained on the inner wall can be collected. Therefore, possibility that the target substance remains on the inner wall of a purification instrument can be lowered and a rate of collection thereof can be improved.

(Clause 2) In the purification apparatus according to Clause 1, the control device is configured to cause the supernatant that remains in the overflow pipe to flow back into the container to move a gas-liquid interface in the overflow pipe.

According to the purification apparatus according to Clause 2, impact force originating from movement of the gas-liquid interface in the overflow pipe facilitates separation of the target substance attached to the inner wall of the overflow pipe. Therefore, possibility that the target substance remains on the inner wall of the purification instrument can be lowered and the rate of collection thereof can be improved.

(Clause 3) The purification apparatus according to Clause 1 or 2 further includes an introduction port for introduction of the heavy solution into the container and a discharge port for discharge of the heavy solution from the container. The control device is configured to cause the supernatant to flow over through the overflow pipe by introduction of the heavy solution from the introduction port into the container and cause the supernatant in the overflow pipe to flow back by discharge of the heavy solution in the container from the discharge port.

According to the purification apparatus according to Clause 3, a configuration for introduction of the heavy solution for gravity separation into container 50 can also be applied to overflow through the overflow pipe. In addition, a configuration for discharge of the waste solution resulting from gravity separation from the container can also be applied to backflow of the supernatant through the overflow pipe. In other words, overflow and backflow through the overflow pipe can be controlled with a simplified configuration.

(Clause 4) In the purification apparatus according to Clause 3, the control device is configured to cause a first introduction amount of heavy solution to be introduced from the introduction port into the container, cause some of the supernatant to flow over through the overflow pipe by introduction of a second introduction amount of heavy solution from the introduction port into the container after the supernatant is produced in the container, cause the supernatant in the overflow pipe to flow back and return to the container by discharge of a first discharge amount of heavy solution in the container through the discharge port, and cause the supernatant that has flowed back to the container to flow over through the overflow pipe by introduction of a third introduction amount of heavy solution from the introduction port into the container.

According to the purification apparatus according to Clause 4, such control to discharge only a part of the supernatant mainly containing the target substance to the outside or to move the gas-liquid interface in the purification instrument back to a position appropriate for letting the container stand can be carried out.

(Clause 5) The purification apparatus according to Clause 4 further includes an introduction pump configured to introduce the heavy solution from the introduction port into the container and a discharge pump configured to discharge the heavy solution in the container from the discharge port. The control device is configured to control the number of rotations and a rotation time period of the introduction pump to introduce each of the first to third introduction amounts of heavy solution into the container and control the number of rotations and a rotation time period of the discharge pump to discharge the first discharge amount of heavy solution from the container.

According to the purification apparatus according to Clause 5, the introduction pump that provides driving force for introduction of the heavy solution into the container can also be applied to control of the amount of introduction of the heavy solution. The discharge pump that provides driving force for discharge of the heavy solution to the container can also be applied to control of the amount of discharge of the heavy solution. In other words, the amount of introduction and the amount of discharge of the heavy solution can be controlled with a simplified configuration.

(Clause 6) In the purification apparatus according to any one of Clauses 1 to 5, after the control device causes the supernatant produced by gravity separation to flow over for the first time, the control device is configured to repeat a plurality of times of backflow and overflow of the supernatant through the overflow pipe.

According to the purification apparatus according to Clause 6, multiple opportunities for removal of the target substance attached to the overflow pipe can be arranged. Thus, even the target substance that did not come off, for example, in first movement of the gas-liquid interface may come off in any movement of the gas-liquid interface and may be collected in the supernatant.

(Clause 7) A control method according to another aspect is a control method performed by a control device in a purification apparatus. The purification apparatus includes a container, an overflow pipe, and a control device. In the container, a sample is separated with a heavy solution based on a specific gravity. The overflow pipe is a pipe provided at an upper portion of the container, the overflow pipe being arranged to cause a supernatant containing a target substance separated by gravity separation in the container to overflow from the upper portion of the container. The control device controls entry and exit of the heavy solution into and from the container. The control method includes causing some of the supernatant produced by gravity separation to flow over the container through the overflow pipe, causing the supernatant that remains in the overflow pipe to flow back into the container, and causing the supernatant that has flowed back to flow over again through the overflow pipe.

According to the control method according to Clause 7, the target substance that remains in the overflow pipe in overflow of some of the supernatant produced by gravity separation through the overflow pipe can come off from an inner wall of the overflow pipe and return to the supernatant in the container by backflow of the supernatant that remains in the overflow pipe into the container. The supernatant containing the target substance can again be caused to flow over through the overflow pipe so that the target substance that remained on the inner wall can be collected. Therefore, possibility that the target substance remains on the inner wall of a purification instrument can be lowered and a rate of collection thereof can be improved.

It should be understood that the embodiments disclosed herein are illustrative and non-restrictive in every respect. The scope of the present invention is defined by the terms of the claims rather than the description above and is intended to include any modifications within the scope and meaning equivalent to the terms of the claims.

### REFERENCE SIGNS LIST

1 purification apparatus; 11, 12, 13, 14, 15, 16, 17, 18, 19, 20, 21, 22, 23 pipe; 31, 32, 33 pump; 41, 42, 43 electromagnetic valve; 50 container; 55 discharge port; 61, 62, 63, 64 port; 71 stirrer; 72 stirring bar; 80 overflow pipe; 100 purification instrument; 110 decomposition solution reservoir; 120 heavy solution reservoir; 130 rinse solution reservoir; 140, 150 waste solution reservoir; 210 detection filter; 215 supernatant reservoir; 500 control device; 501 computing device; 502 memory; 503 communication device; 504 display device; 505 input device; 506 data reading device; 507 storage medium; 510 storage; 511 control program; 512 control data

## Claims

1. A purification apparatus that purifies a sample containing a target substance by gravity separation, the purification apparatus comprising:
a container in which the sample is separated with a heavy solution based on a specific gravity;
an overflow pipe provided at an upper portion of the container, the overflow pipe being arranged to cause a supernatant containing the target substance separated by gravity separation in the container to overflow from the upper portion of the container; and
a control device that controls entry and exit of the heavy solution into and from the container, wherein
the control device is further configured to cause some of the supernatant produced by gravity separation to flow over the container through the overflow pipe, thereafter cause the supernatant that remains in the overflow pipe to flow back into the container, and then cause the supernatant to flow over again through the overflow pipe.

2. The purification apparatus according to claim 1, wherein
the control device is configured to cause the supernatant that remains in the overflow pipe to flow back into the container to move a gas-liquid interface in the overflow pipe.

3. The purification apparatus according to claim 1, further comprising:
an introduction port for introduction of the heavy solution into the container; and
a discharge port for discharge of the heavy solution from the container, wherein
the control device is configured to
cause the supernatant to flow over through the overflow pipe by introduction of the heavy solution from the introduction port into the container, and
cause the supernatant in the overflow pipe to flow back by discharge of the heavy solution in the container from the discharge port.

4. The purification apparatus according to claim 3, wherein
the control device is configured to
cause a first introduction amount of heavy solution to be introduced from the introduction port into the container,
cause some of the supernatant to flow over through the overflow pipe by introduction of a second introduction amount of heavy solution from the introduction port into the container after the supernatant is produced in the container,
cause the supernatant in the overflow pipe to flow back and return to the container by discharge of a first discharge amount of heavy solution in the container through the discharge port, and
cause the supernatant that has flowed back to the container to flow over through the overflow pipe by introduction of a third introduction amount of heavy solution from the introduction port into the container.

5. The purification apparatus according to claim 4, further comprising:
an introduction pump configured to introduce the heavy solution from the introduction port into the container; and
a discharge pump configured to discharge the heavy solution in the container from the discharge port, wherein
the control device is configured to
control the number of rotations and a rotation time period of the introduction pump to introduce each of the first to third introduction amounts of heavy solution into the container, and
control the number of rotations and a rotation time period of the discharge pump to discharge the first discharge amount of heavy solution from the container.

6. The purification apparatus according to claim 1, wherein
after the control device causes the supernatant produced by the gravity separation to flow over for a first time, the control device is configured to repeat a plurality of times, backflow and overflow of the supernatant through the overflow pipe.

7. A control method performed by a control device in a purification apparatus, the purification apparatus including a container in which a sample containing a target substance is separated with a heavy solution based on a specific gravity, an overflow pipe provided at an upper portion of the container, the overflow pipe being arranged to cause a supernatant containing the target substance separated by gravity separation in the container to overflow from the upper portion of the container, and a control device that controls entry and exit of the heavy solution into and from the container, the control method comprising:
causing some of the supernatant produced by gravity separation to flow over the container through the overflow pipe;
causing the supernatant that remains in the overflow pipe to flow back into the container; and
causing the supernatant that has flowed back to flow over again through the overflow pipe.
